Europäisches Patentamt

European Patent Office

Office européen des brevets

(19)

(11) Veröffentlichungsnummer : **0 405 641 B1**

## (12) EUROPÄISCHE PATENTSCHRIFT

(45) Veröffentlichungstag der Patentschrift :
15.03.95 Patentblatt 95/11

(51) Int. Cl.⁶ : **H02G 3/08**

(21) Anmeldenummer : **90201555.1**

(22) Anmeldetag : **30.05.90**

(54) **Industrie-Abzweigdose für elektrische Kabelverbindungen.**

(30) Priorität : **27.06.89 DE 3920964**

(43) Veröffentlichungstag der Anmeldung :
**02.01.91 Patentblatt 91/01**

(45) Bekanntmachung des Hinweises auf die
Patenterteilung :
**15.03.95 Patentblatt 95/11**

(84) Benannte Vertragsstaaten :
**AT BE CH DE DK ES FR GB GR IT LI LU NL SE**

(56) Entgegenhaltungen :
**DE-A- 1 640 302**
**FR-A- 1 551 840**
**US-A- 3 288 910**

(73) Patentinhaber : **Rose-Elektrotechnik GmbH +
Co KG Elektrotechnische Fabrik
Erbeweg 13 - 15
D-32457 Porta Westfalica (DE)**

(72) Erfinder : **Die Erfinder haben auf ihre Nennung
verzichtet**

(74) Vertreter : **Hanewinkel, Lorenz, Dipl.-Phys.
Patentanwalt
Ferrariweg 17a
D-33102 Paderborn (DE)**

**Beschreibung**

Die Erfindung bezieht sich auf eine Industrie-Abzweigdose für elektrische Kabelverbindungen, welche ein Unterteil mit Kabeldurchgängen und einen durch Schrauben mit dem Unterteil verbindbaren Deckel hat und im Unterteil Anschlußklemmen für die elektrischen Kabel aufweist.

Bei den in der Praxis bekannten Industrie-Abzweigdosen sind die Kabeldurchgänge von ausbrechbaren Wandteilen im Unterteil vorgesehen und stellen nach dem Ausbrechen kreisförmige Löcher dar.

Das Einführen der in der Industrie anfallenden elektrischen Kabel ist dabei schwierig und umständlich, da diese Kabel an der Wand befestigt sind und dann schlaufenförmig gebogen durch die Löcher in das Unterteil eingeführt werden müssen, was bei dickeren Kabeln eine gewisse Kraft erfordert und oft schwierig durchführbar ist.

Aus der US-A-3 288 910 ist eine wasserdichte Steckdose für den Haushalt, Keller- und Feuchtigkeitsbereich bekannt geworden, welche mehrteilig aus einem Unterteil, einem Oberteil und einem Schnappdeckel zum Schließen der Zugangsöffnung zur Stromabnahme gebildet ist; zwischen Unterteil, Oberteil und Schnappdeckel sind Dichtungen angeordnet und alle drei Teile werden durch Schrauben miteinander verbunden.

Die bekannte Steckdose ist aufgrund ihrer Konstruktion und umständlichen Schrauben-Verbindungsart für eine industrielle elektrische Kabeleinführung und -verbindung mit leichter und bequemer elektrischer Verdrahtung und späteren Prüf-, Kontroll- und Meßzwecken nicht geeignet.

Aufgabe der Erfindung ist es, eine Industrie-Abzweigdose gemäß der eingangs genannten Art dahingehend zu verbessern, daß sie ein einfaches, bequemes und schnelles Einbringen der an der Wand befestigten Kabel in das ebenfalls an der Wand festgelegte Unterteil ermöglicht und dann in dem verhältnismäßig flachen Aufnahmeraum des Unterteile eine leichte und saubere Verdrahtung gestattet und nach der Verdrahtung ein in sich sicher abgedichtetes Gehäuse ergibt.

Diese Aufgabe wird erfindungsgemäß durch die kennzeichnenden Merkmale des Patentanspruches 1 gelöst, wobei die in den einzelnen Unteransprüchen aufgeführten Gestaltungsmerkmale vorteilhafte Weiterbildungen der Aufgabenlösung darstellen.

Die Industrie-Abzweigdose gemäß der Erfindung ist dreiteilig aus einem Unterteil, einem damit verrastbaren Rahmen und einem über den Rahmen mit dem Unterteil verbindbaren Deckel gebildet.

Da für die elektrische Verkabelung im Unterteil ein größerer Raum zur Verfügung stehen sollte, ist praktisch das Unterteil in seiner Höhe zweigeteilt und zu dem Unterteil und dem damit verbindbaren Rahmen ausgestaltet worden, wobei in dem Unterteil die Kabeldurchgänge herstellungsmäßig bereits ausgeformt sind und zum Rahmen hin offen sind.

Bei Nichtgebrauch der Kabeldurchgänge werden diese durch am Rahmen angeformte Schließlappen geschlossen.

Diese Industrie-Abzweigdose wird zweigeteilt gelagert und transportiert, und zwar in einem Teil als Unterteil und in dem anderen als Deckel mit Rahmen, indem der Deckel durch die Klemmhülsen in den Einsteckhülsen des Rahmen lösbar gehalten ist.

Das Unterteil läßt sich als selbständiges Teil an einer Wand oder dgl. befestigen und dann können die elektrischen Kabel, die in der Industrie verhältnismäßig dicke Querschnitte aufweisen, mit ihrer Kabelverschraubung von oben her in einfacher und schneller Weise in die offenen Kabeldurchgänge eingelegt werden, wobei eine Mutter jeder Kabelverschraubung gleichzeitig in einer innenseitigen Mehrkantaufnahme des Unterteiles im Anschluß an den Kabeldurchgang verdrehgesichert eingesetzt wird.

Dann läßt sich in dem flachen Unterteil die elektrische Verdrahtung leicht und bequem vornehmen.

Danach wird der Rahmen mit Deckel auf das Unterteil aufgesetzt und die Schnapphaken im Rahmen rasten in die dafür vorgesehenen Aussparungen im Unterteil ein, wobei gleichzeitig die Kabelverschraubungen von den ausgebrochenen Teil-Kabeldurchgängen im Rahmen umfangsmäßig geschlossen werden.

Nunmehr wird der Deckel mit seinen Schrauben mit dem Unterteil verbunden und dann werden die Kabelverschraubungen angezogen.

Zwischen Rahmen und Unterteil ist umlaufend eine Rahmendichtung eingesetzt, die auch die Kabelverschraubungen teilweise umgibt und die in Verbindung mit den Ringdichtungen der Kabelverschraubungen die Kabeldurchgänge und den Stoß zwischen Unterteil und Rahmen allseitig abdichtet.

Der Deckel geht mit dem Rahmen eine abgedichtete Falzverbindung (Nut-Federverbindung) ein, so daß auch hier eine Abdichtung vorhanden ist.

Das gesamte Gehäuse der Industrie-Abzweigdose ist einfach aufgebaut, kostengünstig herstellbar und zeigt eine erheblich verbesserte Montage, Kabeleinführung und Verdrahtung.

Zu Überprüfungen, Kontrollzwecken und Messungen kann der Deckel durch Lösen seiner Schrauben vom Rahmen abgenommen werden, wobei kein Lösen der Kabelverschraubungen, die im Unterteil und Rahmen, unabhängig vom Deckel festgelegt sind, nötig ist; der Deckel ermöglicht, ohne Beeinflussungen der Verdrahtungen und Kabelverschraubungen, jederzeit einen Zugang zum Inneren des Gehäuses.

Auf den Zeichnungen ist ein Ausführungsbeispiel der Erfindung dargestellt, welches nachfolgend näher erläutert wird. Es zeigt:

| | |
|---|---|
| Fig. 1 | einen senkrechten Schnitt durch eine dreiteilige Industrie-Abzweigdose mit Kabelverschraubung, |
| Fig. 2 | einen Querschnitt durch die dreiteilige, aus einem Unterteil, einem Rahmen und einem Deckel bestehende Abzweigdose im auseinandergenommenen Zustand der drei Einzelteile, |
| Fig. 3 | einen Schnitt durch einen Randbereich der Abzweigdose, wobei der Rahmen mit dem Unterteil verrastet und der Deckel mit einer Klemmhülse im Rahmen lösbar gehalten ist, |
| Fig. 4 | eine Draufsicht auf das Unterteil mit darin angeordneten Anschlußklemmen und eingesetzter Kabelverschraubung, |
| Fig. 5 | einen Schnitt durch das Unterteil gemäß Schnittlinie I-I in Fig. 4, |
| Fig. 6 | einen Schnitt durch das Unterteil gemäß Schnittlinie II-II in Fig. 4, |
| Fig. 7 | einen Schnitt durch einen Eckbereich des Unterteiles gemäß Schnittlinie III-III in Fig. 4, |
| Fig. 8 | eine Draufsicht auf den Rahmen, |
| Fig. 9 und 10 | einen Quer- und einen Längsschnitt durch den Rahmen, |
| Fig. 11 | eine Unteransicht des Deckels, |
| Fig. 12 | einen Schnitt durch den Deckel gemäß Schnittlinie IV-IV in Fig. 11, |
| Fig. 13 | einen Schnitt durch einen Eckbereich des Deckels gemäß Schnittlinie V-V in Fig. 11, |
| Fig. 14 | eine Unteransicht einer Rahmendichtung, |
| Fig. 15 | eine Seitenansicht der Rahmendichtung in Pfeilrichtung Y gesehen, |
| Fig. 16 | eine Seitenansicht der Rahmendichtung in Pfeilrichtung Z gesehen. |

Die Industrie-Abzweigdose für elektrische Kabelverbindungen ist dreiteilig ausgebildet und setzt sich aus einem Unterteil (1), einem Rahmen (2) und einem Deckel (3) zusammen, wobei zwischen Unterteil (1) und Deckel (3) der Rahmen (2) liegt und mit dem Unterteil (1) verrastbar ist.

Das Unterteil (1) ist kastenartig ausgebildet und hat eine quadratische Grundform.

In allen vier Seitenwänden (4) des Unterteiles (1) ist mindestens eine oder sind jeweils zwei Kabeldurchgänge (5) ausgemuldet, wobei diese Kabeldurchgänge (5) zum Rahmen (2) hin offen sind.

Die Kabeldurchgänge (5) sind halbkreisförmig ausgeführt und an der Innenseite der Seitenwände (4) zu eckigen Einsetzaufnahmen (6) gestaltet, die einen Teil eines Sechseckes einnehmen und in die eine Mutter (7) einer Kabelverschraubung (8) verdrehgesichert eingesetzt werden kann.

Außerhalb der Kabeldurchgänge (5) ist in jeder Seitenwand (4) mindestens eine Rastaussparung (9) ausgenommen.

In allen vier Ecken des Unterteiles (1) ist jeweils ein durch Materialverdickung eingeformter Bock (10) vorgesehen, der einerseits außen ein Senkloch (11) für eine Befestigungsschraube (31) und andererseits innen ein oder zwei Einstecklöcher (12) für jeweils eine Anschlußklemme (13) bildet.

Der Rahmen (2) ist in der Grundform quadratisch ausgebildet und zeigt in seinen vier Ecken eingeformte Einsteckhülsen (14), die koaxial zu den Senklöchern (11) im Unterteil (1) verlaufen.

Weiterhin ist an den vier Seitenwandungen des Rahmens (2) jeweils mindestens ein nach innen vorstehender Schnapphaken (15) angeformt, der in die Rastaussparung (9) des Unterteiles (1) einrastet.

Entsprechend der Anordnung und Anzahl der Rastaussparungen (9) im Unterteil (1) sind die Schnapphaken (15) am Rahmen (2) angeformt.

Weiterhin zeigt der Rahmen (2) an seinen vier Seitenwänden in Richtung Unterteil (1) über dem Rahmen (2) hinausstehende, halbkreisförmige Schließlappen (16), die in die halbkreisförmigen Kabeldurchgänge (5) des Unterteiles (1) einfassen und die Kabeldurchgänge (5) bei Nichtgebrauch verschließen.

Sofern eine Kabelverschraubung (8) eingesetzt werden soll, lassen sich die Schließlappen (16) in der Sollbruchstelle (17) aus den Seitenwänden des Rahmens (2) ausbrechen und bilden dann einen halbkreisförmigen Kabeldurchgang im Rahmen (2), so daß mit dem Unterteil (1) kreisförmige Kabeldurchgänge (5) geschaffen worden sind.

Im Stoß zwischen Unterteil (1) und Rahmen (2) ist im Unterteil (1) umlaufend eine Nut (18) ausgenommen, die in den Eckbereichen bogenförmig zwischen dem Senkloch (11) und dem Einstecklöch (12) geführt ist. Diese Nut (18) verjüngt sich zum Nutengrund hin dreieckförmig.

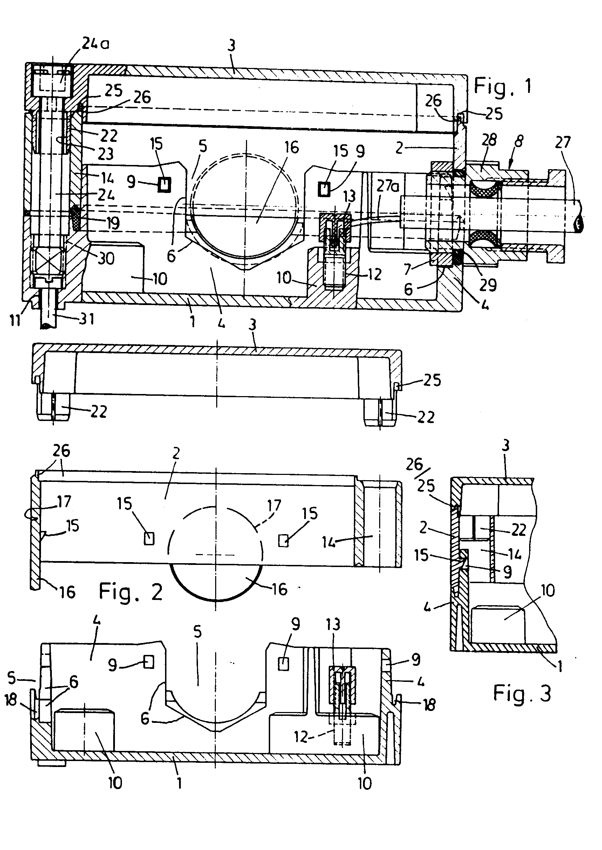

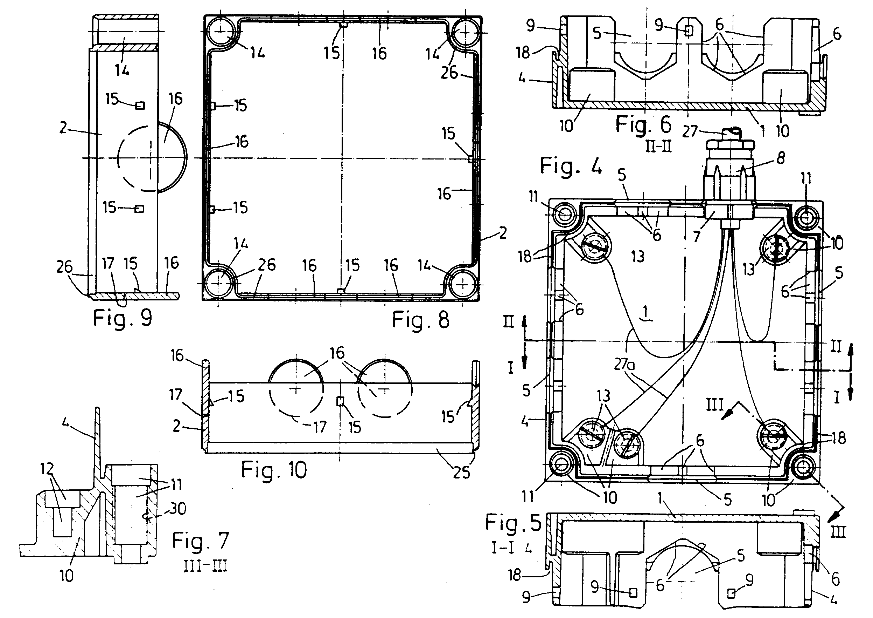

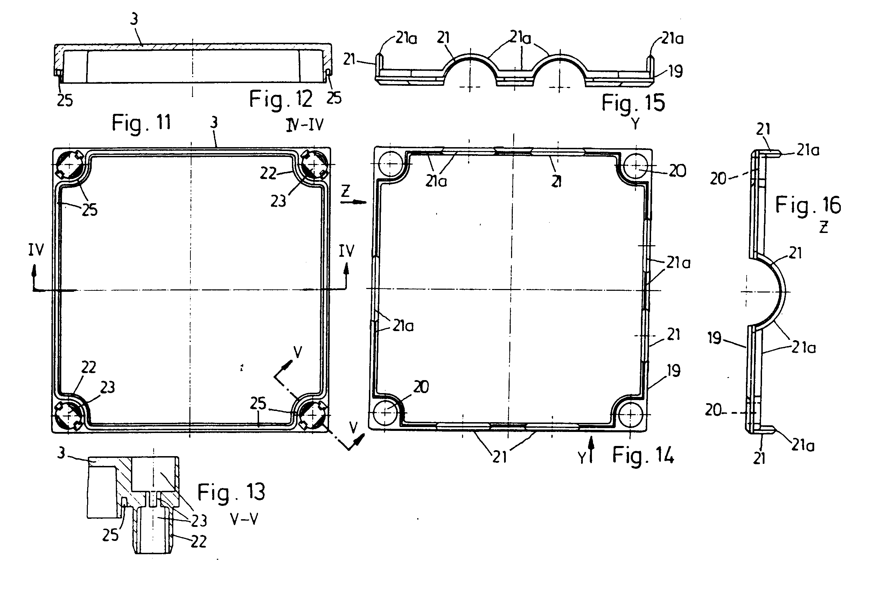

Der untere, bogenförmige Bereich der Kabeldurchgänge (5) im Unterteil (1) ist ebenfalls entsprechend der Nut (18) in der Wandstärke des Kabeldurchganges (5) dreieckförmig ausgebildet. In diese Nut (18) wird eine Rahmendichtung (19) gemäß Fig. 14 bis 16 eingesetzt, die entsprechend dem Umlauf der Nut (18) ausgebildet ist, in ihren vier Ecken Durchstecklöcher (20) aufweist und entsprechend der Kabeldruchgänge (5) im Unterteil (1) mit halbkreisförmigen, aus der Rahmendichtungsebene herausgeformtem Dichtungsbogen (21) ausgestattet ist.

Diese Rahmendichtung (19) ist auf ihrem gesamten Umfang auch im Bereich der Dichtbogen (21) mit einer dreieckförmigen Verjüngung versehen, so daß diese Rahmendichtung (19) formschlüssig in die Nut (18) des Unterteiles (1) eingesetzt werden kann.

Der Deckel (3) zeigt eine quadratische Grundform und ist kastenartig ausgebildet.

In den vier Ecken des Deckels (3) ist jeweils eine aus dem Deckel (3) herausragende Klemmhülse (22) eingeformt, die gleichzeitig ein durchgehendes Senkloch (23) für eine Verbindungsschraube (24) zwischen Deckel (3) und Unterteil (1) bildet.

Mit diesen Klemmhülsen (22) greift der Deckel (3) in die Einsteckhülsen (14) des Rahmens (2) ein.

Im Stoß zwischen Deckel (3) und Rahmen (2) ist eine abdichtende Falzverbindung vorhanden, die von einer im Deckel (3) ausgesparten, umlaufenden Nut (25) und einem am Rahmen (2) umlaufenden Steg (26) gebildet ist, wobei die Nut (25) und der Steg (26) im Bereich der Einsteckhülsen (14) und Klemmhülsen (22) bogenförmig um diese herumgeführt sind.

Die Montage und elektrische Verdrahtung der Abzweigdose geschieht folgendermaßen:

Zuerst wird das Unterteil (1) an der Befestigungsfläche, wie Wand, verschraubt, indem durch die Senklöcher (11) im Unterteil (1) Befestigungsschrauben (31) gesteckt werden.

Danach können die an der Wand befestigten elektrischen Kabel (27) mit der Kabelverschraubung (8) von oben her in die Kabeldurchgänge (5) des Unterteiles (1) eingeführt werden, wobei die Sechskantmutter (7) der Kabelverschraubung (8) in die eckige Einsetzaufnahme (6) verdrehgesichert eingesetzt wird.

Nun erfolgt in dem flachen Unterteil die elektrische Verdrahtung, indem die einzelnen elektrischen Leitungen (27a) vom Kabel (27) zu den eckseitigen Anschlußklemmen (13) verlegt werden. Es ist bevorzugt, die Verdrahtung jeweils diagonal zur betreffenden Ecke durchzuführen, so daß ein sauberes Verdrahtungsbild entsteht und die elektrischen Leitungen (27a) nicht in Schlaufenform mittig im Unterteil (1) liegen. Dadurch besteht auch die Möglichkeit, mittig im Unterteil (1) einen sogenannten Klemmstein für eine Verdrahtung anzuordnen.

Der Deckel (3) ist mit seinen Klemmhülsen (22) in die Einsteckhülsen (14) des Rahmens (2) eingesetzt und zu einer lösbaren Einheit verbunden.

Die Klemmhülsen (22) und Einsteckhülsen (14) wirken durch Reibwiderstand zusammen. Der Deckel (3) und Rahmen (2) werden nach der Verdrahtung als eine Einheit auf das Unterteil (1) gesteckt und dabei rasten die Schnapphaken (15) des Rahmens (3) in die Rastaussparungen (9) im Unterteil (1) ein, wobei gleichzeitig der Rahmen (2) im Stoß auf die Rahmendichtung (19) einwirkt.

Das Unterteil (1) und der Rahmen (2) bilden jetzt eine Gehäuseunterteileinheit, wobei gleichzeitig die Kabeldurchgänge (5) vom Rahmen (2) übergriffen werden, d.h., im Umfang geschlossen werden.

Nunmehr wird der Deckel (3) durch die eckseitigen Schrauben (24) mit dem Unterteil (1) verbunden, wobei diese Schrauben (24) mit ihrem Kopf (24a) in den Senklöchern (23) liegen, die Klemmhülsen (22) und Einsteckhülsen (14) und die Löcher (20) in der Dichtung (19) durchfassen und in ein Innengewinde (30) der Senklöcher (11) im Unterteil (1) eingreifen.

Dann werden die Kabelverschraubungen (8) angezogen, wobei die außenliegende Verschraubungsmutter (28) mit der innenliegenden Mutter (7) zusammenwirkt und eine um die Mutter (28) innerhalb des Kabeldurchgangs (5) umlaufende Ringdichtung (29) beaufschlagt. Hierdurch ist aufgrund der umlaufenden Rahmendichtung (19) und der Verschraubungs-Ringdichtung (29) eine sichere Abdichtung zwischen Rahmen (2) und Unterteil (1) sowie an der Kabelverschraubung (8) erreicht.

Zu Überprüfungen, Kontrollzwecken und Messungen der Verdrahtungen im Gehäuse läßt sich der Deckel (3) durch Lösen seiner Schrauben (24) abnehmen, wobei er mit seinen Klemmhülsen (22) aus den Einsteckhülsen (14) der Rahmens (2) herausgezogen wird. Der Rahmen (2) verbleibt am Unterteil (1) und die Kabelverschraubungen (8) brauchen nicht gelöst zu werden.

Die drei Einzelteile (1, 2, 3) sind jeweils einteilig aus Kunststoff hergestellt.


**Patentansprüche**


1.  Industrie-Abzweigdose für elektrische Kabelverbindungen, welche ein Unterteil (1) mit Kabeldurchgängen (5) und einen durch Schrauben (24) mit dem Unterteil (1) verbindbaren Deckel (3) hat und im Unterteil (1) Anschlußklemmen (13) für die elektrischen Kabel (27) aufweist, dadurch gekennzeichnet, daß das Unterteil (1) als Flachkasten mit ausgemuldeten, zur offenen Kastenseite hin offenen Kabeldurchgängen (5) ausgebildet ist,
    der Deckel (3) mit einem Rahmen (2) zu einer trennbaren Montageeinheit verbunden ist,
    der Rahmen (2) mit über den Rahmen (2) hinausstehenden, ausbrechbaren Schließlappen (16) ausgestattet ist, die beim Nichtgebrauch der Kabeldurchgänge (5) im Unterteil (1) schließend in dieselben eingreifen und durch eine Sollbruchstelle (17) aus dem Rahmen (2) ausbrechbar sind, wodurch im Unterteil (1) und Rahmen (2) vollständige Kabeldurchgänge (5) vorhanden sind,

der Rahmen (2) mit Deckel (3) nach dem Kabeleinlegen und -verdrahten im Unterteil (1) auf das Unterteil (1) aufgesetzt und mit dem Unterteil (1) verrastet ist und dabei der Rahmen (2) im Stoß mit dem Unterteil (1) die nicht benutzten Kabeldurchgänge (5) schließt und auf eine im Stoß zwischen Unterteil (1) und Rahmen (2) liegende, umlaufende, jede in die Kabeldurchgänge (5) eingesetzte Kabelverschraubung (8) teilweise umfassende Rahmendichtung (19) einwirkt und

der Deckel (3) mittels den Rahmen (2) durchfassender Schrauben (24) mit dem Unterteil (1) lösbar verbunden und von dem verrasteten Unterteil-Rahmenbauteil abnehmbar ist.

2. Industrie-Abzweigdose nach Anspruch 1, dadurch gekennzeichnet, daß das Unterteil (1) kastenartig mit quadratischer Grundform ausgebildet ist und in allen vier Seitenwänden jeweils mindestens einen Kabeldurchgang (5) aufweist, der halbkreisförmig ausgeführt und an der Innenseite der Seitenwände (4) zu einer eckigen Einsetzaufnahme (6) für das verdrehgesicherte Einsetzen einer Mutter (7) der Kabelverschraubung (8) gestaltet ist.

3. Industrie-Abzweigdose nach Anspruch 1 oder 2, dadurch gekennzeichnet, daß in jeder Seitenwand (4) des Unterteiles (1) außerhalb der Kabeldurchgänge (5) jeweils mindestens eine Rastaussparung (9) ausgenommen ist, in die ein am Rahmen (2) innenseitig angeformter Schnapphaken (15) eingreift.

4. Industrie-Abzweigdose nach einem der Ansprüche 1 bis 3, dadurch gekennzeichnet, daß in allen vier Ecken des Unterteiles (1) jeweils ein Bock (10) eingeformt ist, der einerseits ein in der Außenecke liegendes Senkloch (11) für eine Befestigungsschraube (31) und andererseits innen ein oder zwei Einstecklöcher (12) für jeweils eine Anschlußklemme (13) bildet.

5. Industrie-Abzweigdose nach einem der Ansprüche 1 bis 4, dadurch gekennzeichnet, daß der Rahmen (2) eine quadratische Grundform zeigt und in seinen vier Ecken jeweils eine eingeformte, koaxial zu den Senklöchern (11) im Unterteil (1) liegende Einsteckhülse (14) besitzt.

6. Industrie-Abzweigdose nach einem der Ansprüche 1 bis 5, dadurch gekennzeichnet, daß an den Seitenwänden des Rahmens (2) innenseitig die Schnapphaken (15) und an der dem Unterteil (1) zugewandten Rahmenkante die über die Rahmenkante hinausragende Schließlappen (16) angeformt sind, die halbkreisförmige Grundform besitzen.

7. Industrie-Abzweigdose nach einem der Ansprüche 1 bis 6, dadurch gekennzeichnet, daß im Unterteil (1) in dessen Stoß zum Rahmen (2) eine umlaufende Nut (18) ausgenommen ist, die sich im Bereich der eckseitigen Böcke (10) zwischen Senkloch (11) und Anschlußklemme (13) bogenförmig nach innen erstreckt.

8. Industrie-Abzweigdose nach einem der Ansprüche 1 bis 7, gekennzeichnet durch eine in der Grundform quadratische Rahmendichtung (19) mit in den vier Ecken ausgesparten Durchstecklöchern (20) und entsprechend dem Bogenverlauf der Kabeldurchgänge (5) im Unterteil (1) aus der Rahmendichtungsebene herausgeformten Dichtungsbogen (21), wobei diese Rahmendichtung (19) formschlüssig in die Nut (18) des Unterteiles (1) eingesetzt ist und dabei der Nutengrund der Nut (18) und der darin eingreifende freie Rand der Rahmendichtung (19) im Querschnitt dreieckförmig verjüngt sind.

9. Industrie-Abzweigdose nach einem der Ansprüche 1 bis 8, dadurch gekennzeichnet, daß der Deckel (3) kastenartig mit quadratischer Grundform ausgebildet ist und in seinen vier Ecken innenseitig jeweils eine eingeformte, aus der offenen Deckelseite herausragende Klemmhülse (22) aufweist, mit der der Deckel (3) unter Reibwirkung in die Einsteckhülsen (14) des Rahmens (2) eingreift und die gleichzeitig ein Senkloch (23) für die Verbindungsschraube (24) zum Unterteil (1) bildet.

10. Industrie-Abzweigdose nach einem der Ansprüche 1 bis 9, dadurch gekennzeichnet, daß der Rahmen (2) und Deckel (3) durch Falzverbindung abgedichtet miteinander verbunden sind, wobei im Deckel (3) umlaufend eine Nut (25) ausgespart ist, in die ein am Rahmen (2) umlaufender Steg (26) eingreift.

## Claims

1. Industrial-type tapping box for electric cable joints, having a lower part (1) mit cable passages (5) and having a cover (3) adapted to be joined by screws (24) to the lower part (1), and having terminals (13) in the lower part (1) for the electrical cables (27), characterised in that the lower part (1) is in the form of a flat box with hollowed-out cable passages (5) which are open towards the open face of the box,
the cover (3) is connected to a frame (2) to make a separable assembly unit,
the frame (2) is equipped with closure tabs (16) which protrude beyond the frame (2) and are adapted to be knocked out, and which when the cable passages (5) in the lower part (1) are not in use engage sealingly into said passages and can be knocked out from the frame (2) through a nominal rupture point (17), with the result that complete cable passages (5) exist in the lower part (1) and frame (2),
after inserting and wiring up the cable in the lower part (1), the frame (2) with its cover (3) is placed onto the lower part (1) and is latched to the lower part (1), and at the same time the frame (2) butt-jointed to the lower part (1) closes the unused cable passages (5) and acts on a peripheral frame seal (19) which is butt-joined between the lower part (1) and the frame (2) and which partly grips each cable gland (8) inserted into the cable passages (5), and
the cover (3) is connected in releasable manner to the lower part (1) by means of screws (24) which pass through the frame (2) and is adapted to be removed from the latched unit comprising the lower part and the frame.

2. Industrial-type tapping box according to claim 1, characterised in that the lower part (1) is a box-shaped construction with a square base and in all four side walls incorporates at least one respective cable passage (5) which is semi-circular in shape and is constructed on the inner face of the side walls (4) to form an angular insert locator (6) for inserting a nut (7) for the cable gland (8) in a manner locked against rotation.

3. Industrial-type tapping box according to claim 1 or 2, characterised in that each side wall (4) of the lower part (1) outside the cable passages (5) incorporates at least one respective latching recess (9) into which engages a snap-fitting hook (15) moulded on the inside of the frame (2).

4. Industrial-type tapping box according to any of claims 1 to 3, characterised in that in all four corners of the lower part (1) is incorporated a respective support (10) which on the one hand forms a countersunk hole (11) in the outer corner for a fixing screw (31) and on the other hand internally forms one or two socket holes (12) for a respective terminal (13).

5. Industrial-type tapping box according to any of claims 1 to 4, characterised in that the frame (2) exhibits a square base and in each of its four corners incorporates a socket sleeve (14) situated coaxially to the countersunk holes (11) in the lower part (1).

6. Industrial-type tapping box according to any of claims 1 to 5, characterised in that on the side walls of the frame (2) the snap-fit hooks (15) are moulded internally and on the frame edge nearest the lower part (1) are moulded the closure tabs (16) which protrude beyond the frame edge, said tabs (16) having a semicircular base.

7. Industrial-type tapping box according to any of claims 1 to 6, characterised in that incorporated in the lower part (1), at the place where it is butt-jointed to the frame (2), is a peripheral groove (18) which in the region of the corner supports (10) extends inwards in an arc between the countersunk hole (11) and the terminal (13).

8. Industrial-type tapping box according to any of claims 1 to 7, characterised by a frame seal (19) having a square base with through-holes (20) incorporated in the four corners and in the lower part (1) sealing arcs (21) corresponding to the arcuate profile of the cable passages (5) and shaped out of the plane of the frame seal, said frame seal (19) being inserted in a form-fit into the groove (18) in the lower part (1), and the floor of the groove (1) and the free rim of the frame seal (19) engaging thereinto tapering in a triangular cross-section.

9. Industrial-type tapping box according to any of claims 1 to 8, characterised in that the cover (3) is a box-type construction with a square base and inside each of its four corners incorporates a clamping sleeve (22) which projects from the open face of the cover and with which the cover (3) engages by the action of friction into the plug-in sleeves (14) of the frame (2), and which at the same time forms a countersunk hole (23) for the connecting screw (24) to the lower part (1).

10. Industrial-type tapping box according to any of claims 1 to 9, characterised in that the frame (2) and the cover (3) are joined together in a sealing manner by a grooved joint, there being incorporated all around the cover (3) a groove (25) into which a cross-piece (26) running around the frame (2) engages.


**Revendications**

1. Boîte industrielle de dérivation pour connexions électriques de câbles comprenant une partie inférieure (1) avec passages de câbles (5) et un couvercle (3) pouvant être relié à la partie inférieure (1) à l'aide de vis (24), la partie inférieure (1) étant équipée de bornes de raccord (13) pour les câbles électriques (27), caractérisée en ce que

   la partie inférieure (1) est conçue sous forme de caisse plate présentant des passages de câbles (5) s'ouvrant sur le côté ouvert de la caisse,

   que le couvercle (3) est relié à un cadre (2), avec lequel il forme une unité de montage séparable, le cadre (2) étant équipé d'oreilles de fermeture (16) en saillie au-dessus du cadre (2), qui, lorsque les passages de câbles ne sont pas utilisés, s'engagent dans ceux-ci pour fermer la partie inférieure (1) et peuvent être enlevés du cadre en les en séparant à partir d'un point destiné à la rupture (17), de sorte que la partie inférieure (1) et le cadre présentent des passages de câbles complets,

   après câblage, le cadre (2), avec le couvercle (3), est enclenché dans la partie inférieure (1), le cadre (2), joint à la partie inférieure (1), fermant les passages de câbles (5) non utilisés et agissant sur un joint d'étanchéité, (19) du cadre, qui, pris entre la partie inférieure (1) et le cadre (2), entoure, partiellement, chaque vissage (8) placé dans les passages de câbles (5),

   le couvercle (3) est relié amoviblement à la partie inférieure (1) à l'aide de vis (24), qui traversent le cadre (2), et peut être séparé de l'unité que forment la partie inférieure et le cadre.

2. Boîte industrielle de dérivation selon la revendication 1, caractérisée en ce que

   la parte inférieure (1) est en forme de caisse de forme fondamentale quadrangulaire et que les quatre parois latérales présentent chacune au moins un passage de câble (5) exécuté en demi-cercle et formant, sur la face intérieure des parois latérales (4) une cavité de réception (6) angulaire pour la mise en place antitorsion d'un écrou (7) de vissage (8) de câble.

3. Boîte industrielle de dérivation selon la revendication 1 ou 2, caractérisée en ce que,

   en dehors des passages de câbles (5), un évidement de blocage (9), au moins, est pratiqué dans chaque paroi latérale (4) de la partie inférieure (1), évidement de blocage (9) dans lequel s'enclenche un crochet à déclic (15), formé à partir du cadre, sur la face intérieure de celui.

4. Boîte industrielle de dérivation selon l'une des revendications 1 à 3, caractérisée en ce que

   chacun des quatre coins de la pièce inférieure (1) est équipé d'un bloc (10), formé d'une pièce à partir d'eux, lequel forme une cavité (11), située dans l'angle extérieur pour noyer une vis de fixation (31) et, d'autre part, un ou deux trous d'enfichage (12), à l'intérieur, recevant chacun une borne de raccord (13).

5. Boîte industrielle de dérivation selon l'une des revendications 1 à 4, caractérisée en ce que

   le cadre (2) possède une forme fondamentale quadrangulaire et qu'une douille d'enfichage (14), formée d'une pièce à partir du cadre (2), est disposée dans chacun de ses coins, coaxialement par rapport aux cavités (11) de la partie inférieure.

6. Boîte industrielle de dérivation selon l'une des revendications 1 à 5, caractérisée en ce que

   les crochets à déclic (15) sont formés d'une pièce à partir des parois latérales du cadre (2), côté intérieur, tandis que des oreilles de fermeture (16) en demi-cercle, faisant saillie en dehors du bord du cadre, sont formées d'une pièce à partir du bord du cadre dirigé vers la partie inférieure (1).

**7.** Boîte industrielle de dérivation selon l'une des revendications 1 à 6,
caractérisée en ce que
une rainure continue (18) est pratiquée dans la partie de la pièce inférieure (1) jointe au cadre (2), cette rainure continue (18) s'étendant en forme d'arc dans la zone des blocs (10) d'angles, entre la cavité (11) et la borne de raccord (13).

**8.** Boîte industrielle de dérivation selon l'une des revendications 1 à 7,
caractérisée en ce que
l'étanchéité du cadre est assurée par un joint d'étanchéité (19) de forme fondamentale quadrangulaire avec des trous de passage (20) pratiqués dans ses quatre coins et des courbes qui correspondent à celles des passages de câbles (5) de la partie inférieure (1) et sont formées à partir du niveau du joint d'étanchéité, ce dispositif d'étanchéité du cadre (19) étant inséré à engagement positif dans la rainure (18) de la partie inférieure (1) et le fond de la rainure (18) et le bord libre du joint d'étanchéité (19), qui s'y engage, présentant une section transversale qui s'amincit triangulairement.

**9.** Boîte industrielle de dérivation selon l'une des revendications 1 à 8,
caractérisée en ce que
le couvercle (3) est conçu sous forme de caisse de forme fondamentale quadrangulaire et présente, dans chacun de ses quatre angles, côté intérieur, une douille de serrage (22) en saillie hors du côté ouvert du couvercle et que le couvercle (3) s'enclenche dans les douilles d'enfichage (14) du cadre (2) à l'aide de ces douilles de serrage (22), sous l'effet de friction, ces douilles de serrage (22) formant, simultanément, un trou (23) dans lequel la vis (24) de fixation à la partie inférieure (1) est noyée.

**10.** Boîte industrielle de dérivation selon l'une des revendications 1 à 9,
caractérisée en ce que
le cadre (2) et le couvercle (3) sont assemblés de fâçon étanche, le couvercle présentant une rainure (25), dans laquelle s'engage une nervure (26) qui fait le tour du cadre (2).

Fig. 1

Fig. 2

Fig. 3

Fig. 4

Fig. 5
I-I

Fig. 6
II-II

Fig. 7
III-III

Fig. 8

Fig. 9

Fig. 10

Fig. 11

Fig. 12

IV-IV

Fig. 13

V-V

Fig. 14

Fig. 15

Fig. 16

EP 0 405 641 B1